Europäisches Patentamt

European Patent Office

Office européen des brevets

(11) Veröffentlichungsnummer: **0 196 613 B1**

## (12) EUROPÄISCHE PATENTSCHRIFT

(45) Veröffentlichungstag der Patentschrift: **11.09.91**

(21) Anmeldenummer: **86104138.2**

(22) Anmeldetag: **25.03.86**

(51) Int. Cl.5: **B60M 1/30**, B60M 1/34, H02G 5/04

(54) Stromschienenhalter aus Kunststoff.

(30) Priorität: **03.04.85 DE 3512161**

(43) Veröffentlichungstag der Anmeldung:
**08.10.86 Patentblatt 86/41**

(45) Bekanntmachung des Hinweises auf die
Patenterteilung:
**11.09.91 Patentblatt 91/37**

(84) Benannte Vertragsstaaten:
**AT BE CH FR GB IT LI LU NL SE**

(56) Entgegenhaltungen:
**EP-A- 0 018 597**
**DE-A- 1 515 330**
**DE-B- 1 272 412**
**DE-B- 1 279 159**
**DE-C- 3 311 362**

(73) Patentinhaber: **Paul Vahle GmbH & Co. KG**
**Westicker Strasse 52**
**W-4708 Kamen(DE)**

(72) Erfinder: **Hillmann, Willi**
**Ostkamp 8**
**W-4708 Kamen(DE)**

(74) Vertreter: **Henfling, Fritz, Dipl.-Ing.**
**Beurhausstrasse 7**
**W-4600 Dortmund 1(DE)**

EP 0 196 613 B1

Rank Xerox (UK) Business Services

## Beschreibung

Die Erfindung betrifft einen Stromschienenhalter der im Oberbegriff des Patentanspruchs 1 umrissenen Gattung.

Solche Stromschienenhalter werden bislang in der Regel als einstückige Kunststoff-Formteile angeboten (DE-C-3 311 362). Dabei stellt sich das Problem, daß einem Stromschienenhalter immer nur eine bestimmte Stromschienenabmessung zugeordnet werden kann, also solche Stromschienenhalter als Ganzes für verschiedene Stromschienenabmessungen bereitgehalten werden müssen. Die zur Verfügung stehenden Stromschienenhalter dieser Art erfordern somit zwangsläufig eine erhebliche Lagerhaltung. Auch ist die Zusammenfassung unterschiedlicher Stromschienen in einem solchen Stromschienenhalter nicht möglich. Eine beliebige Variierung der Abstände zwischen den Stromschienen läßt sich bei den bekannten Stromschienenhaltern ebenfalls nicht realisieren, insoweit ist man allenfalls darauf verwiesen, eine zwischen zwei belegten Stromschienenaufnahmen unbelegt zu lassen.

Ausgehend vom im vorausgehenden umrissenen Stand der Technik liegt der Erfindung die Aufgabe zugrunde, einen solchen Stromschienenhalter aus Kunststoff so auszugestalten, daß er bei möglichst geringem Platzbedarf Variationen hinsichtlich der zu verlegenden Stromschienen als auch hinsichtlich ihrer Verlegungsweise zuläßt.

Die Aufgabe wird mit einem Stromschienenhalter der eingangs umrissenen Gattung erfindungsgemäß durch eine Ausgestaltung entsprechend dem kennzeichnenden Teil des Patentanspruchs 1 gelöst.

Die Clips, die in verschiedenen, auf unterschiedliche Stromschienenquerschnitte ausgelegten Größen bereitgehalten werden, werden nach Bedarf an der Montageplatte angesetzt, das heißt, in die Montageplatte eingesprengt, wobei dann auch Stromschienen mit verschiedenen Querschnitten ein und derselben Montageplatte zugeordnet werden können, sowie beliebige Abstände zwischen den Clips und damit den Stromschienen gewählt werden können. Die Zuordnung der Clips zur Montageplatte dergestalt, daß die eigentlichen Stromschienenaufnahmen im Wechsel an die eine und an die andere Längskante der Montageplatte angrenzen, eröffnet die Möglichkeit einer engsten Packung der Clips auf der Montageplatte ohne Beeinträchtigung der Stromschienenmontage.

Aus der DE-B-1 272 412 ist zwar auch schon ein Halter für eine Mehrzahl von elektrischen Leitungen, Kabeln, Rohren odgl. bekannt, der aus einer Montageplatte und an ihr ansetzbaren Clips besteht, wobei die Montageplatte an ihren Längskanten mit über eine ihrer Breitseiten vorspringenden, von innen her hinterschnittenen Randteilen versehen ist und jeder Clip von einem sich unter die hinterschnittenen Randteile einfügenden Steg ausgeht, ein solcher Halter läßt eine so enge Packung, wie sie die erfindungsgemäße Lösung ermöglicht, allerdings nicht zu.

Ist der Steg, von dem der Clip ausgeht, an den Stirnseiten abgesetzt, trägt das zur Lagefixierung des Clips an der Montageplatte bei.

Werden die Clips bzw. Stromschienenaufnahmen der Montageplatte in größeren Abständen zugeordnet, erweist es sich als zweckmäßig, wenn die Stege auf der von den Stromschienenaufnahmen abgekehrten Seite mit einem Führungsbolzen versehen sind, der sich im Einbauzustand in einem in der Montageplatte dafür vorgesehenen, Bestandteil eines Lochbildes bildenden Loch führt, womit die einzelnen Stromschienenaufnahmen eindeutig an der Montageplatte fixiert werden.

In der Zeichnung ist die Erfindung weitergehend erläutert.
Es zeigen:

Figur 1 den neuen Stromschienenhalter im Querschnitt,

Figur 2 den Bestandteil des Stromschienenhalters bildenden Clip in Stirnansicht,

Figur 3 einen installierten Stromschienenhalter mit der engsten Packung ihm zugeordneter Clips,

Figur 4 den installierten Stromschienenhalter mit ihm in Abständen zugeordneten Clips.

Die im Wesentlichen rechteckige Montageplatte 11 weist an den Längskanten 12,12' über die Breitseite 13 vorspringende hinterschnittene (16) Randteile 14,14' auf. Zugeordnet werden der Montageplatte 11 nach Bedarf Clips 21, die an Stege 22 angeformt sind, die an den Enden abgesetzt sind (221). Das Bauteil 21,22 wird im folgenden als Stromschienenaufnahme bezeichnet.

Die Stromschienenaufnahmen 21,22 werden nach Bedarf von einer Stirnseite der Montageplatte 11 her (Pfeil A) der Montageplatte 11 zugeordnet oder aber in die Montageplatte 11 eingesprengt (Pfeil B). Letzteres ist allein möglich, wenn die Stromschienenaufnahmen 21,22 mit sich in dafür vorgesehene Löcher 17 in der Montageplatte 11 einfügenden Führungsbolzen 23 versehen sind.

Wie sich aus den Figuren 3 und 4 ergibt, ist eine dichte Packung der Stromschienenaufnahmen 21,22 auf der Montageplatte 11 möglich (Figur 3), gleichermaßen eine einen Abstand zwischen den Stromschienenaufnahmen 21,22 bzw. zwischen den in sie eingefügten Stromschienen 41 belassende Zuordnung der Stromschienenaufnahmen 21,22 zur Montageplatte 11 (Figur 4). Des weiteren lassen sich ein und derselben Montageplatte 11 Stromschienenaufnahmen 21,22 zuordnen, deren Clips 21 auf voneinander abweichende Stromschienenquerschnitte ausgelegt sind.

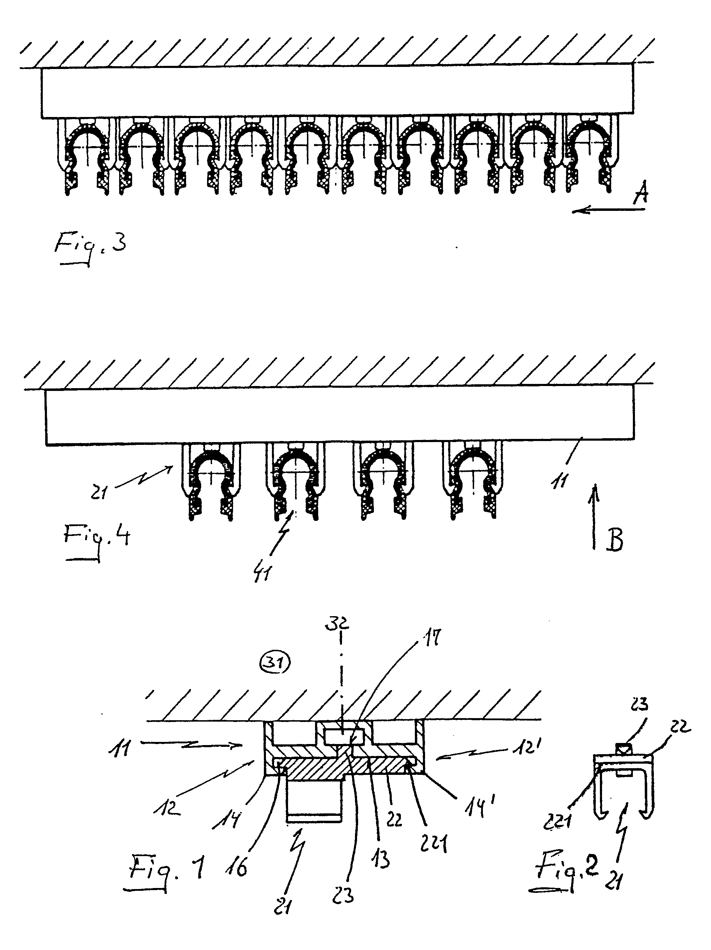

Bei einer dichten Packung der Stromschienenaufnahmen 21,22 auf der Montageplatte 11 empfiehlt es sich, die aus Figur 1 entnehmbare Ausführungsform der Stromschienenaufnahmen 21,22 der Montageplatte 11 im Wechsel so zuzuordnen, daß die Clips 21 jeweils an den einen (14) und an den anderen (14') Rand der Montageplatte 11 angrenzen. Das erleichtert die anschließende Montage der in die Clips 21 zu überführenden Stromschienen 41.

Dargestellt ist eine abgehängte Installation (31,32). Gleichermaßen läßt sich der Stromschienenhalter natürlich auch an der Wand anschlagen.

## Patentansprüche

1. Stromschienenhalter aus Kunststoff, bestehend aus einer Montageplatte (11) mit einer Mehrzahl von aus ihr vorspringenden, im Abstand voneinander verlaufende Stromschienen (41) formschlüssig aufnehmenden Clips (21), dadurch gekennzeichnet, daß die Montageplatte (11) an ihren Längskanten (12, 12') mit über eine ihrer Breitseiten vorspringenden, von innen her hinterschnittenen (16) Randteilen (14, 14') versehen ist, daß jeder Clip (21) von einem sich unter die hinterschnittenen Randteile (14, 14') einfügenden Steg (22) ausgeht, daß der Steg (22) die doppelte Länge des Clips (21) zuzüglich der sich unter die hinterschnittenen Randteile (14, 14') einfügenden Überstände (221) aufweist und der Clip (21) unter Belassung des Überstandes (221) an einem Ende des Steges (22) angeformt ist.

2. Stromschienenhalter nach Anspruch 1, dadurch gekennzeichnet, daß der Steg (22) an den Stirnseiten abgesetzt ist.

3. Stromschienenhalter nach Anspruch 1 oder Anspruch 2, dadurch gekennzeichnet, daß der Steg (22) auf der vom Clip (21) abgekehrten Seite mit einem sich in dafür vorgesehene Löcher (17) in der Montageplatte (11) einfügenden Führungsbolzen (23) versehen ist.

4. Stromschienenhalter nach Anspruch 3, gekennzeichnet durch eine Montageplatte (11) mit vorgeprägten Flächenteilen zur Lochbildung (17).

## Claims

1. Current-collecting rail holder of plastics material, comprising a mounting plate (11) with a plurality of clips (21), which protrude from said plate and accommodate, in a form-fitting manner, current-collecting rails (41), which extend with spacings from one another, characterised in that the mounting plate (11) is provided, at its longitudinal edges (12,12'), with edge portions (14,14'), which protrude beyond one of its wide ends and has internal recesses (16), in that each clip (21) extends from a cross-piece member (22), which is inserted beneath the recessed edge portions (14,14'), in that the cross-piece member (22) is twice the length of the clip (21) plus the protruding lengths (221), which are inserted beneath the recessed edge portions (14,14'), and the clip (21) is shaped to fit on one end of the cross-piece member (22) so as to leave the projecting length (221).

2. Current-collecting rail holder according to claim 1, characterised in that the cross-piece member (22) is stepped at the end faces.

3. Current-collecting rail holder according to claim 1 or claim 2, characterised in that the cross-piece member (22) is provided, on the side remote from the clip (21), with a guide bolt (23), which is inserted into bores (17), provided therefor, in the mounting plate (11).

4. Current-collecting rail holder according to claim 3, characterised by a mounting plate (11) provided with pre-stamped surface portions for the formation of bores (17).

## Revendications

1. Support de rails électriques en matière synthétique, composé d'une plaque de montage (11), avec une pluralité d'attaches (21), faisant saillie sur la plaque, recevant avec ajustement de forme des rails électriques (41) qui s'étendent de façon espacée les uns par rapport aux autres, caractérisé en ce que la plaque de montage (11) est pourvue, sur ses bords longitudinaux (12,12') de parties de bordure (14,14') en contre-dépouille (16) sur l'arrière, faisant saillie sur l'un de leurs côtés larges, chaque attache (21) partant d'une barrette (22) s'insérant au-dessous des parties de bordure en contre-dépouille (14,14'), la barrette (22) présentant une longueur double de celle de l'attache (21) en plus des prolongements (221) à introduire sous les parties de bordures en contre-dépouille (14,14') et l'attache (21) étant formée d'un seul tenant sur une extrémité de la barrette (22), en laissant subsister le dépassement (221).

2. Support de rails électriques selon la revendication 1, caractérisé en ce que la barrette (22) est décalée sur les faces frontales.

3. Support de rails électriques selon la revendication 1 ou 2, caractérisé en ce que, du côté opposé à l'attache (21), la barrette (22) est pourvue d'un téton de guidage (23) s'introduisant dans des trous (17) prévus à cet effet dans la plaque de montage (11).

4. Support de rails électriques selon la revendication 3, caractérisé par une plaque de montage (11) comportant des parties de surface préformés, en vue de former de trous (17).

Fig.3

Fig.4

21

11

41

A

B

32

(31)

17

11

12

14

16

21

23

12'

22

221

13

14'

Fig. 1

23

22

221

21

Fig.2

21